# EUROPÄISCHE PATENTANMELDUNG

(11) **EP 4 578 704 A1**
(43) Veröffentlichungstag der Anmeldung: **02.07.2025**
(21) Anmeldenummer: 24223797.2
(22) Anmeldetag: 30.12.2024
(51) Int. Cl.: B60L 7/10, B60L 7/14, B60L 7/16, B60L 50/60

(54) **REICHWEITENOPTIMIERTES ELEKTRISCH ANGETRIEBENES FAHRZEUG**

(30) Priorität: 30.12.2023 DE 102023136902
(71) Anmelder: Issa, Orans, 76756 Bellheim (DE)
(72) Erfinder: Issa, Orans, 76756 Bellheim (DE)
(74) Vertreter: Kurz, Andreas

(57) **Zusammenfassung**

Die Erfindung betrifft ein Fahrzeug (1) mit mindestens zwei Rädern (2, 3) zum Abrollen auf einem Untergrund, das über eine elektrische Antriebseinheit zum Antrieb mindestens eines der Räder (2) verfügt. Dabei besitzt die elektrische Antriebseinheit mindestens einen Elektromotor (4), der über Antriebsmittel (25) mit dem mindesten einen Rad (2) drehfest verbunden ist, und einen elektrischen Akkumulator (5), der elektrisch mit dem Elektromotor (4) verbunden ist. Zur Erzeugung einer Fahrbewegung ist der Elektromotor (4) mit elektrischer Energie aus dem Akkumulator (5) beaufschlagbar. Um die Reichweite eines solchen Fahrzeugs (1) zu vergrößern wir erfindungsgemäß vorgeschlagen, dass das Fahrzeug (1) einen elektrischen Generator (12) und eine Getriebeeinrichtung (13, 27, 32, 35) aufweist und der Generator (12) zur Übertragung der Rotation der Räder (2, 3) des Fahrzeugs (1) auf den Generator (12) mittels der Getriebeeinrichtung (13, 27, 32, 35) mit einem Rad (3) gekoppelt ist. Der Generator (12) ist darüber hinaus elektrisch mit dem Akkumulator (5) verbunden, um die im Generator (12) erzeugte elektrische Energie in den Akkumulator (5) einzuspeisen.

## Beschreibung

### Gebiet der Erfindung

Die Erfindung betrifft ein reichweitenoptimiertes elektrisch angetriebenes Fahrzeug gemäß dem Oberbegriff des Anspruchs 1.

### Stand der Technik

Elektrisch angetriebene Fahrzeuge gewinnen als Alternative zu Fahrzeugen mit Verbrennungsmotor immer mehr an Bedeutung. Ursache hierfür ist unter anderem deren vergleichsweise höherer Wirkungsgrad von über 90 % und der emissionsärmerer Betrieb, was mit den stetig steigenden Anforderungen an die Umweltverträglichkeit korreliert.

Wesentliche Komponenten elektrisch angetriebener Fahrzeuge sind ein Elektromotor und ein mit elektrischer Energie aufladbarer Akkumulator, wobei der Motor die für den Antrieb des Fahrzeugs notwendige Energie von dem Akkumulator bezieht. Ein Wechselrichter wandelt dabei den vom Akkumulator zur Verfügung gestellten Gleichstrom in Wechselstrom um, da der Motor in der Regel als synchroner Wechselstrommotor konzipiert ist. Eine Leistungselektronik steuert zu jedem Zeitpunkt der Fahrt den Energiefluss vom Akkumulator zum Motor entsprechend dem spezifischen Bedarf.

Die Reichweite eines elektrisch angetriebenen Fahrzeugs wird von der Kapazität des Akkumulators bestimmt. Größe und Gewicht eines Akkumulators begrenzen derzeit die Reichweiten auf einige hundert Kilometer, was deutlich unter den möglichen Reichweiten von Fahrzeugen mit Verbrennungsmotoren liegt. Hinzu kommt, dass der Ladevorgang selbst mit moderner Ladetechnik verhältnismäßig lange dauert, was die Reisetauglichkeit elektrisch angetriebener Fahrzeuge stark beeinträchtigt. Im Ergebnis ist die Akzeptanz von elektrisch angetriebenen Fahrzeugen seitens potentieller Fahrer eher verhalten.

### Zusammenfassung der Erfindung

Vor diesem Hintergrund liegt die Aufgabe der Erfindung darin, elektrisch angetriebene Fahrzeuge im Hinblick auf deren Reichweite und Betriebskosten zu verbessern.

Diese Aufgabe wird durch ein Fahrzeug mit den Merkmalen des Anspruchs 1 gelöst.

Vorteilhafte Ausführungsformen ergeben sich aus den Unteransprüchen.

Die Erfindung beruht auf dem Grundgedanken, die dem Fahrzeug während der Fahrt inhärente kinetische Energie in elektrische Energie umzuwandeln und dem Akkumulator zuzuführen. Die für diesen Vorgang zur Verfügung stehende kinetische Energie kann beispielsweise auf einen Geschwindigkeitsüberschuss zurückzuführen sein, der in elektrische Energie übergeführt wird, oder auf den Abbau potentieller Energie zugunsten kinetischer Energie. Der auf diese Weise rückgewonnene Anteil an elektrischer Energie kann vom Elektromotor genutzt und in zusätzliche Strecke umgesetzt werden. Die Reichweite eines erfindungsgemäßen Fahrzeugs wird dadurch erheblich vergrößert ohne die Kosten für den Fahrzeugbetrieb zu erhöhen.

Ohne sich darauf einzuschränken, wird die Erfindung nachstehend anhand in der Zeichnung dargestellter Ausführungsbeispiele näher erläutert, wobei weitere Merkmale und Vorteile der Erfindung offenbar werden.

### Kurze Beschreibung der Zeichnung

Es zeigt
- Fig. 1: in schematischer Darstellung eine erste Ausführungsform eines erfindungsgemäßen Fahrzeug mit seinen erfindungswesentlichen Komponenten in einer Draufsicht,
- Fig. 2: in schematischer Darstellung eine zweite Ausführungsform eines erfindungsgemäßen Fahrzeug mit seinen erfindungswesentlichen Komponenten in einer Draufsicht auf eine Fahrzeughälfte, und
- Fig. 3: in schematischer Darstellung eine Längsansicht auf das in Fig. 2 gezeigte Fahrzeug.

### Beschreibung der Ausführungsformen

Das Fahrzeug 1 mit Fahrgestell und Aufbau oder selbsttragender Karosserie besitzt zwei in Fahrtrichtung vordere, angetriebene Räder 2 und zwei in Fahrtrichtung hintere, nicht angetriebene Räder 3, mit denen es auf einem nicht weiter dargestellten Untergrund wie etwa einer Fahrbahn steht. Zwischen den vorderen Rädern 2 nimmt das Fahrzeug 1 einen Elektromotor 4 auf, der jeweils über eine Antriebswelle 25 mit den vorderen Rädern 2 verbunden ist und diese zur Erzeugung einer Fahrbewegung antreibt. Der Elektromotor 4 ist ein Drehstrommotor, beispielsweise ein permanent erregter oder fremderregter Synchronmotor.

Zentral im Fahrzeug 1 angeordnet sieht man einen Akkumulator 5, der aus einer nicht weiter dargestellten externen Energiequelle, beispielsweise einer Ladestation, mit Gleichstrom aufgeladen ist. Der Akkumulator 5 kann beispielsweise ein Lithium-Ionen-Akku, ein Lithium-Eisenphosphat-Akku oder Feststoffspeicher sein. Die Ausgangsspannung beträgt im vorliegenden Ausführungsbeispiel 150 V oder 400 V oder 800 V, kann aber auch zwischen diese Werten liegen. Die Versorgung des Elektromotors 4 mit elektrischer Energie aus dem Akkumulator 5 erfolgt über elektrische Gleichstromleitungen 6, 7, die zu einem ersten Stromrichter 8 in Form eines Wechselrichters führen.

Der Wechselrichter wandelt den Gleichstrom in einen dreiphasigen Wechselstrom um, der über die elektrischen Leitungen 9, 10, 11 dem Elektromotor 4 zugeführt wird. Eine nicht weiter dargestellte Leistungselektronik regelt dabei Frequenz und Amplitude des Wechselstroms in Abhängigkeit des vom momentanen Fahrzustand abhängigen Energiebedarfs.

Im Bereich eines hinteren Rades 3 ist ein elektrischer Generator 12 fest mit dem Fahrzeug 1 verbaut. Der Generator 12 ist über einen Getriebeeinrichtung in Form eines Riemengetriebes 13 mit einem der hinteren Räder 3 gekoppelt. Dazu sitzt auf dem Ende der Generatorwelle 14 eine erste Riemenscheibe 15 und auf dem hinteren Rad 3 eine zweite Riemenscheibe 16, die in einer gemeinsamen Ebene liegen und über einen Antriebsriemen 17 miteinander verbunden sind. Bei der Rotation des hinteren Rades 3, beispielsweise während der Fahrt, wird über die zweite Riemenscheibe 16, den Antriebriemen 17 und die erste Riemenscheibe 15 der elektrische Generator 12 ebenfalls in Rotation versetzt, der dabei einen dreiphasigen Wechselstrom erzeugt. Am Ausgang des Generators 12 liegt eine dreiphasige Wechselspannung von maximal 800 V an. Die Nennleistung des Generators 12 liegt zwischen 10 kVA und 30 kVA, vorzugsweise zwischen 15 kVA und 25 kVA. Im vorliegenden Ausführungsbeispiel besteht der elektrische Generator 12 aus einem permanenterregten Synchrongenerator mit im Rotor angeordneten Permanentmagneten.

Der vom Generator 12 erzeugte Wechselstrom wird über elektrische Leitungen 18, 19, 20 einem im Fahrzeug 1 fest verbauten zweiten Stromrichter 21 in Form eines Frequenzumrichters mit variablem Gleichstrom-Zwischenkreis zugeführt und in einen Gleichstrom umgewandelt. Die elektrische Spannung am Ausgang des Frequenzumrichters beträgt maximal 800 V, insbesondere maximal 400 V.

Der Frequenzumrichter ist über elektrischen Gleichstromleitungen 22, 23 an den Akkumulator 5 angeschlossen, so dass die vom Generator 12 erzeugte elektrische Energie zum Laden des Akkumulators 5 zur Verfügung steht. Bei stark unterschiedlichen Spannungsniveaus zwischen Ausgang des Frequenzumrichters und Akkumulator 5 kann, wie in der Figur dargestellt, ein Gleichstromspannungswandler 26 zwischengeschaltet sein, der die höhere Spannung des Frequenzumrichters an das Spannungsniveau des Akkumulators 5 anpasst.

Um die vom Generator 12 erzeugte elektrische Energie auch direkt für den Antrieb des Fahrzeugs 1 nutzen zu können, ist zwischen dem Wechselrichter, dem Frequenzumrichter und dem Akkumulator 5 ein Abzweigkasten 24 angeordnet, der die gleichpoligen Leitungen 6 und 22 bzw. 7 und 23 miteinander verbindet. Die vom Frequenzumrichter kommende elektrische Energie kann somit zum Laden des Akkumulators 5 und/oder zum Antreiben des Elektromotors 4 verwendet werden.

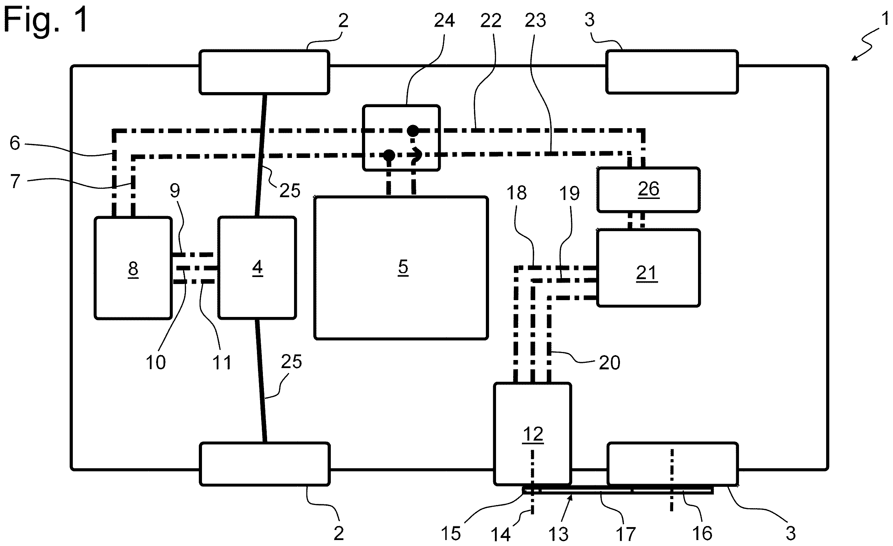

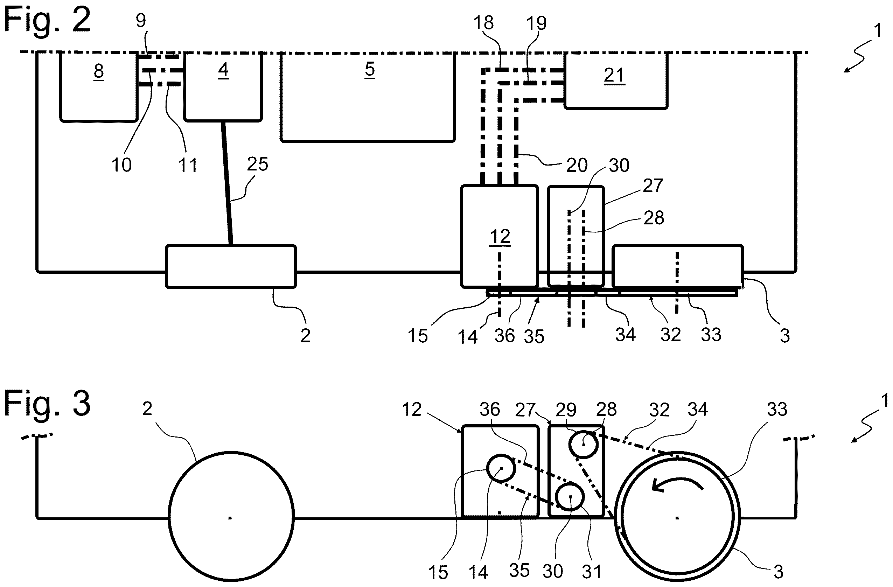

Das in den Fig. 2 und 3 dargestellte Fahrzeug 1 entspricht weitestgehend dem unter Fig. 1 beschriebenen, so dass für funktionsgleiche bzw. funktionsähnliche Merkmale gleichlautende Bezugszeichen benutzt werden und im Umfang der Übereinstimmungen auf die vorbeschrieben Ausführungen Bezug genommen wird.

Wesentlicher Unterschied ist der Einsatz eines ortsfest im Fahrzeug 1 verbauten Getriebes 27 im Antriebsstrang des Generators 12 zwischen Rad 3 und Generator 12. Das Getriebe 27 besitzt am Getriebeeingang eine Antriebswelle 28, auf der koaxial eine erste Getrieberiemenscheibe 29 sitzt, und am Getriebeausgang eine Abtriebswelle 30 mit einer koaxialen zweiten Getrieberiemenscheibe 31. Die beiden Getrieberiemenscheiben 29, 31 sind im vorliegenden Fall durchmessergleich, können aber auch unterschiedliche Durchmesser zur Anpassung des Übersetzungsverhältnisses aufweisen. Das Getriebe 27 ist ein mechanisches Getriebe, dessen Antriebwelle 28 und Abtriebswelle 30 mittels im Getriebeinneren zusammenwirkender Getriebeelemente wie zum Beispiel Zahnräder mechanisch gekoppelt sind, so dass deren Drehzahlen in einem festen Verhältnis zueinander stehen. Im vorliegenden Ausführungsbeispiel beträgt das Verhältnis von Antriebsdrehzahl zu Abtriebsdrehzahl 1 : 4, das heißt die Abtriebswelle 30 rotiert viermal so schnell wir die Antriebswelle 28.

Der Antrieb des Getriebes 27 erfolgt über einen ersten Riementrieb 32 mit einer ersten Riementriebscheibe 33, die koaxial und drehfest zum Rad 3 angeordnet ist, sowie einem ersten Antriebsriemen 34, der endlos über die erste Riementriebscheibe 33 und erste Getrieberiemenscheibe 29 geführt ist. Das Durchmesserverhältnis von durchmessergrößerer erster Riementriebscheibe 33 zu durchmesserkleinerer erster Getrieberiemenscheibe 29 ist so gewählt, dass sich ein Übersetzungsverhältnis von 1 : 3 ergibt, die Antriebswelle 28 des Getriebes 27 rotiert somit dreimal so schnell wie die erste Riementriebscheibe 33.

Abtriebsseitig ist das Getriebe 27 über einen zweiten Riementrieb 35 an den Generator 12 angeschlossen. Zu diesem Zweck führt der Endlosriemen 36 des zweiten Riementriebs 35 über die auf der Generatorwelle 14 sitzende Riemenscheibe 15 und zweite Getrieberiemenscheibe 31, die beide den gleichen Durchmesser besitzen. Die Kombination aus erstem Riementrieb 32, Getriebe 27 und zweitem Riementrieb 35 führt zu einer Gesamtübersetzung von 1 : 12, das heißt die Generatorwelle 14 rotiert 12 mal so schnell wie die vom Rad 3 angetriebene erste Riementriebscheibe 33.

Es versteht sich, dass vorliegende Erfindung nicht auf die vorgenannten festen Übersetzungsverhältnisse beschränkt ist, sondern davon abweichende Varianten ebenfalls umfasst sind, die an den Grundgedanken der Erfindung anknüpfen. Darüber hinaus ist es möglich, durch Einsatz eines Stufengetriebes bzw. eines stufenlosen Getriebes, das Übersetzungsverhältnis abgestuft bzw. stufenlos einstellen zu können.

### Bezugszeichenliste:

- 1: Fahrzeug
- 2: Vordere Räder
- 3: Hintere Räder
- 4: E-Motor
- 5: Akkumulator
- 6: DC-Leitung
- 7: DC-Leitung
- 8: Erster Stromrichter (Wechselrichter)
- 9: AC-Leitung
- 10: AC-Leitung
- 11: AC-Leitung
- 12: Generator
- 13: Riemengetriebe
- 14: Generatorwelle
- 15: 1. Riemenscheibe
- 16: 2. Riemenscheibe
- 17: Antriebsriemen
- 18: AC-Leitung
- 19: AC-Leitung
- 20: AC-Leitung
- 21: 2. Stromrichter (Frequenzumrichter)
- 22: DC-Leitung
- 23: DC-Leitung
- 24: Abzweigkasten
- 25: Antriebswelle
- 26: Gleichstromspannungswandler
- 27: Mechanisches Getriebe
- 28: Antriebswelle
- 29: 1. Getrieberiemenscheibe
- 30: Abtriebswelle
- 31: 2. Getrieberiemenscheibe
- 32: 1. Riementrieb
- 33: 1. Riementriebscheibe
- 34: Antriebsriemen
- 35: 2. Riementrieb
- 36: Endlosriemen

## Patentansprüche

1. Fahrzeug mit mindestens zwei Rädern (2, 3) zum Abrollen auf einem Untergrund und mit einer elektrischen Antriebseinheit zum Antrieb mindestens eines der Räder (2), wobei die elektrische Antriebseinheit einen Elektromotor (4) besitzt, der über Antriebsmittel (25) mit dem mindesten einen Rad (2) drehfest verbunden ist, und einen elektrischen Akkumulator (5), der elektrisch mit dem Elektromotor (4) verbunden ist und aus dem der Elektromotor (4) zur Erzeugung einer Fahrbewegung mit elektrischer Energie beaufschlagbar ist,
**dadurch gekennzeichnet, dass** das Fahrzeug (1) einen elektrischen Generator (12) und eine Getriebeeinrichtung (13, 27, 32, 35) aufweist, wobei der Generator (12) zur Übertragung der Rotation der Räder (2, 3) auf den Generator (12) mittels der Getriebeeinrichtung (13, 27, 32, 35) mit einem Rad (3) des Fahrzeugs (1) gekoppelt ist, und wobei der Generator (12) elektrisch mit dem Akkumulator (5) verbunden ist, so dass die im Generator (12) erzeugte elektrische Energie in den Akkumulator (5) einspeisbar ist.

2. Fahrzeug nach Anspruch 1, **dadurch gekennzeichnet, dass** der Elektromotor (4) ein Wechselstrommotor ist und der Akkumulator (5) ein Gleichstromspeicher, wobei zwischen Akkumulator (5) und Elektromotor (4) ein erster Stromrichter (8) zur Umwandlung von Gleichspannung in Wechselspannung angeordnet ist.

3. Fahrzeug nach Anspruch 1 oder 2, **dadurch gekennzeichnet, dass** der Generator (12) ein Wechselstromgenerator ist und der Akkumulator (5) ein Gleichstromspeicher, wobei zwischen Generator (12) und Akkumulator (5) ein zweiter Stromrichter (21) zur Umwandlung von Wechselspannung in Gleichspannung angeordnet ist.

4. Fahrzeug nach Anspruch 3, **dadurch gekennzeichnet, dass** der Akkumulator (5), der erste Stromrichter (8) und der zweite Stromrichter (21) Teil eines Gleichstrom-Zwischenkreises sind.

5. Fahrzeug nach einem der Ansprüche 1 bis 4, **dadurch gekennzeichnet, dass** der erste Stromrichter (8) ein Wechselrichter ist und/oder der zweite Stromrichter (21) ein Frequenzumrichter mit variablem Gleichstrom-Zwischenkreis.

6. Fahrzeug nach Anspruch 5, **dadurch gekennzeichnet, dass** der zweite Stromrichter (21) eine ausgangsseitige Spannung von maximal 800 V oder maximal 400 V aufweist.

7. Fahrzeug nach einem der Ansprüche 1 bis 5, **dadurch gekennzeichnet, dass** zwischen zweitem Stromrichter (89 und Akkumulator (5) ein Gleichstromspannungswandler (26) angeordnet ist.

8. Fahrzeug nach Anspruch 7, **dadurch gekennzeichnet, dass** der Gleichstromspannungswandler (26) am Ausgang eine Spannung von 150 V bis 800 V besitzt, vorzugsweise von 150 V bis 400 V.

9. Fahrzeug nach einem der Ansprüche 1 bis 8, **dadurch gekennzeichnet, dass** der Generator (12) ein permanenterregter Synchrongenerator ist, insbesondere mit Anordnung der Permanentmagnete im Rotor des Generators (12).

10. Fahrzeug nach einem der Ansprüche 1 bis 9, **dadurch gekennzeichnet, dass** der Generator (12) eine Nennleistung zwischen 10 kVA und 30 kVA besitzt, vorzugsweise zwischen 15 kVA und 25 kVA.

11. Fahrzeug nach einem der Ansprüche 1 bis 10, **dadurch gekennzeichnet, dass** der Akkumulator (5) eine Nennspannung von 100 V bis 900 V besitzt, vorzugsweise von 300 V bis 800 V.

12. Fahrzeug nach einem der Ansprüche 1 bis 11, **dadurch gekennzeichnet, dass** die Getriebeeinrichtung mindestens ein Zugmittelgetriebe umfasst, vorzugsweise ein Kettengetriebe oder Riemengetriebe (15, 32, 35).

13. Fahrzeug nach einem der Ansprüche 1 bis 12, **dadurch gekennzeichnet, dass** Getriebeeinrichtung mindestens ein mechanisches Getriebe (27) umfasst, insbesondere ein Zahnradgetriebe.

14. Fahrzeug nach einem der Ansprüche 1 bis 13, **dadurch gekennzeichnet, dass** die Getriebeeinrichtung (15, 27, 32, 35) ein Übersetzungsverhältnis in einem Bereich von 1 : 10 bis 1 : 15 aufweist, insbesondere von 1 : 12.
